Europäisches Patentamt

European Patent Office

Office européen des brevets

(19)

(11) Veröffentlichungsnummer: **0 242 722**
**B1**

(12) **EUROPÄISCHE PATENTSCHRIFT**

(45) Veröffentlichungstag der Patentschrift:
**27.09.89**

(21) Anmeldenummer: **87105275.9**

(22) Anmeldetag: **09.04.87**

(51) Int. Cl.⁴: **F16D 55/22**, F16D 55/224,
F16D 65/54

(54) Scheibenbremse, insbesondere für Kraftfahrzeuge.

(30) Priorität: **22.04.86 DE 8611037 U**

(43) Veröffentlichungstag der Anmeldung:
**28.10.87 Patentblatt 87/44**

(45) Bekanntmachung des Hinweises auf die Patenterteilung:
**27.09.89 Patentblatt 89/39**

(84) Benannte Vertragsstaaten:
**DE ES FR GB IT**

(56) Entgegenhaltungen:
**DE-A- 2 521 575**
**DE-A- 2 538 352**
**DE-A- 3 024 082**
**DE-B- 1 425 367**
**US-A- 3 403 754**

(73) Patentinhaber: **LUCAS INDUSTRIES public limited company, Great King Street, Birmingham, B19 2XF West Midlands(GB)**

(72) Erfinder: **Rath, Heinrich Bernhard, Sebastian-Kneipp-Strasse 76a, D-5414 Vallendar(DE)**

(74) Vertreter: **Goetz, Rupert et al, Patentanwälte Wuesthoff- v. Pechmann-Behrens-Goetz Schweigerstrasse 2, D-8000 München 90(DE)**

## Beschreibung

Die Erfindung betrifft eine Scheibenbremse, insbesondere für Kraftfahrzeuge, mit einem Paar Bremsbacken, die je einer Seite einer Bremsscheibe zugeordnet sind, und von denen mindestens eine Bremsbacke eine Trägerplatte mit mindestens einem reibbelagfreien Ansatz aufweist, mit dem sie für ihre Verschiebung zur Bremsscheibe hin an einem Führungszapfen geführt ist, der an einem Bremsträger befestigt ist, sich durch den zugehörigen Ansatz hindurch in eine an diesem befestigte Schutzhülse erstreckt und ein der Bremsbacke benachbartes freies Ende hat.

Bei einer bekannten Scheibenbremse dieser Gattung (DE-A- 3 024 082) ist jede der Schutzhülsen im wesentlichen starr und an ihrem der Bremsscheibe zugewandten Ende offen. Bei Betätigung der Bremse verschiebt sich die Schutzhülse insgesamt auf dem zugehörigen Führungszapfen. Dabei können Schmutz und Wasser in das vom zugehörigen Ansatz entfernte Ende der Schutzhülse bis zum freien Ende des zugehörigen Führungszapfens gelangen und von dort unter ungünstigen Umständen weiter zwischen Führungszapfen und Schutzhülse eindringen. Wenn dies geschieht, erfüllt die Schutzhülse ihren Zweck, den Führungszapfen vor Korrosion zu schützen, nur noch unvollständig.

Der Erfindung liegt deshalb die Aufgabe zugrunde, den Schutz solcher Führungszapfen zu verbessern, damit sie ihre Aufgabe, die zugehörige Bremsbacke möglichst reibungsfrei zu führen, auch unter ungünstigen Betriebsbedingungen noch zuverlässiger als bisher erfüllen können.

Die Aufgabe ist bei einer Scheibenbremse der eingangs beschriebenen Gattung erfindungsgemäß dadurch gelöst, daß die Schutzhülse längselastisch gestaltet ist und ein von dem zugehörigen Ansatz der Trägerplatte entferntes Ende hat, das am freien Ende des zugehörigen Führungszapfens dicht befestigt ist, und daß die Befestigung des Führungszapfens am Bremsträger lösbar ist.

Erfindungsgemäß ist also die bzw. jede Schutzhülse einerseits am zugehörigen Ansatz der Trägerplatte und andererseits am freien Ende des zugehörigen Führungszapfens dicht befestigt, sodaß der von der Schutzhülse umschlossene Teil des Führungszapfens, der für eine möglichst reibungsfreie Führung der Bremsbacke verantwortlich ist, von Schmutz und Feuchtigkeit nicht mehr erreicht werden kann. Die bei Betätigung einer so geführten Bremsbacke und bei deren Verschleiß erforderliche Verschiebung gegenüber dem zugehörigen Führungszapfen oder Paar Führungszapfen wird durch die Längselastizität der Schutzhülse oder Schutzhülsen ermöglicht.

Die erforderliche Längselastizität wird vorzugsweise dadurch erreicht, daß die Schutzhülse einen Faltenbalg aufweist.

Besonders zweckmäßig ist es, wenn der Faltenbalg aus korrosionsbeständigem Metall besteht und zugleich als Rückstellfeder für die zugehörige Bremsbacke ausgebildet ist.

Das vom Ansatz der zugehörigen Bremsbacke entfernte Ende jeder Schutzhülse ist vorzugsweise ringförmig gestaltet und am freien Ende des zugehörigen Führungszapfens festgenietet. Es ist ferner vorteilhaft, wenn das am Ansatz befestigte Ende der Schutzhülse mittels einer den Führungszapfen umschließenden Führungsbüchse festgeklemmt ist. Als Alternative dazu kann das am Ansatz befestigte Ende der Schutzhülse selber als Führungsbüchse für den Führungszapfen ausgebildet sein.

Die lösbare Befestigung des bzw. jedes Führungszapfens am Bremsträger ergibt sich vorzugsweise dadurch, daß der Führungszapfen ein Innengewinde hat, in das ein am Bremsträger befestigter Gewindebolzen eingeschraubt ist.

Ein Ausführungsbeispiel der Erfindung wird im folgenden anhand schematischer Zeichnungen mit weiteren Einzelheiten erläutert. Es zeigt:

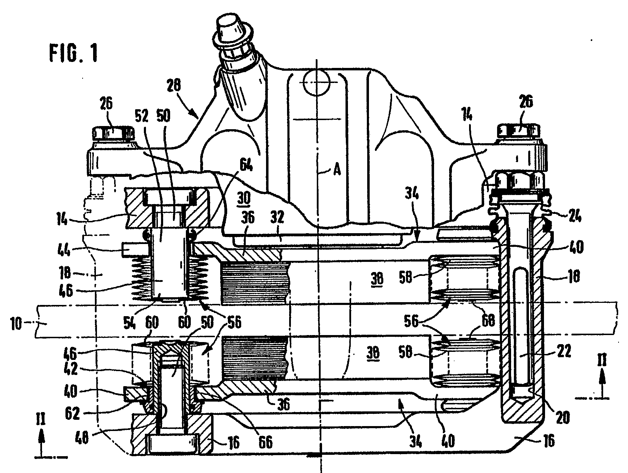

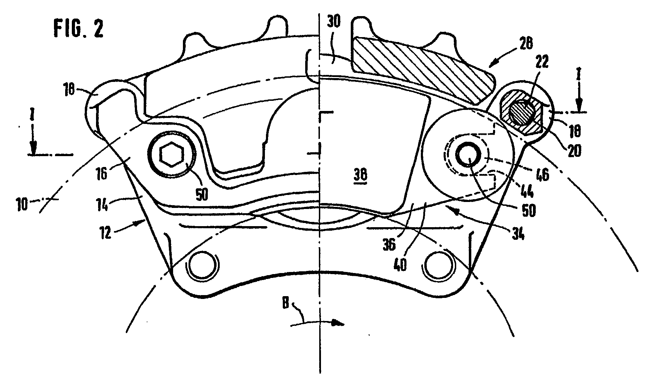

Fig. 1 eine teilweise als Schnitt I-I in Fig. 2 gezeichnete Draufsicht einer erfindungsgemäßen Scheibenbremse und

Fig. 2 die teilweise als Schnitt II-II in Fig. 1 dargestellte Ansicht derselben Scheibenbremse von deren fahrzeugäußeren Seite her.

Die dargestellte Scheibenbremse ist einer mit strichtpunktierten Linien angedeuteten Bremsscheibe 10 zugeordnet, deren Achse mit A und deren Drehrichtung bei Vorwärtsfahrt des zugehörigen Fahrzeugs mit einem Pfeil B bezeichnet ist. Die Scheibenbremse weist einen Bremsträger 12 auf, der eine in bezug auf das zugehörige Fahrzeug innere Platte 14 und eine äußere Platte 16 hat. Die Platten 14 und 16 sind beide ungefähr U-förmig und sind durch zwei parallele Arme 18 miteinander verbunden, die sich in geringem Abstand außerhalb der äußeren Randes der Bremsscheibe 10 erstrecken und je eine zu deren Achse A parallele, zur fahrzeuginneren Seite der Bremse hin offene, zylindrische Bohrung 20 erthalten.

In den Bohrungen 20 ist je ein Gleitbolzen 22 geführt, der mit dem zugehörigen Arm 18 durch eine faltenbalgartige Dichtmanschette 24 verbunden ist. An den beiden Gleitbolzen 22 ist mittels je einer Schraube 26 ein Schwimsattel 28 lösbar befestigt. Der Schwimsattel 28 umgreift den äußeren Rand der Bremsscheibe 10 in der Art einer Faust; solche Schwimsättel werden auch als Faustsättel bezeichnet.

An der fahrzeuginneren Seite des Schwimsattels 28 ist ein hydraulischer Zylinder 30 ausgebildet, in dem ein Kolben 32 geführt ist. Der Kolben 32 ist zur unmittelbaren Betätigung einer fahrzeuginneren Bremsbacke 34 vorgesehen, der jenseits der Bremsscheibe 10 eine fahrzeugäußere Bremsbacke 34 gegenüberliegt, welche durch Verschieben des Schwimsattels 28 betätigbar ist.

Die beiden Bremsbacken 34 sind vollständig gleich; sie haben je eine Trägerplatte 36 aus Stahl, einen daran befestigten Reibbelag 38 und zwei reibbelagfreie Ansätze 40. Von den beiden Ansätzen 40 jeder Trägerplatte 36 hat einer ein zylindrisches Loch 42 und der andere einen in Umfangsrichtung nach außen offenen Schlitz 44. Da beide Bremsbacken 34 vollständig gleich sind, steht dem Schlitz 44 der direkt vom Kolben 32 betätigbaren Bremsbacke 34 das Loch 42 der anderen, durch Verschieben des Schwimmsattels 28 indirekt betätigbaren Bremsbacke 34 gegenüber, und umgekehrt.

Jedem der Löcher 42 und der Schlitze 44 ist ein Führungszapfen 46 zugeordnet, der am Bremsträger 12 lösbar befestigt ist. Zur Befestigung weist jeder Führungszapfen 46 ein Innengewinde 48 auf, in das ein im Bremsträger 12 steckender Gewindebolzen 50 eingeschraubt ist, wodurch ein Ende 52 jedes Führungszapfens 46 fest mit dem Bremsträger 12 verspannt ist. Jeder Führungszapfen 46 hat ein freies Ende 54, dessen Abstand von der Bremsscheibe 10 gleichgroß oder nur wenig größer ist als das übliche Bremslüftspiel.

Jeder der Führungszapfen 46 ist von einer Schutzhülse 56 umschlossen, deren Hauptbestandteil ein Faltenbalg 58 aus einer korrosionsfesten, federelastischen Metallegierung ist. Der Faltenbalg 58 hat ein ringförmiges Ende 60, das mit dem freien Ende 54 des zugehörigen Führungszapfens 46 fest und dicht vernietet ist, wobei im dargestellten Beispiel dieses freie Ende 54 selbst als Niet ausgebildet ist. Das andere Ende 62 jeder Schutzhülse 56 ist zylindrisch gestaltet und erstreckt sich durch das zugehörige Loch 42 bzw. den zugehörigen Schlitz 44 hindurch bis zur Rückseite des zugehörigen Ansatzes 40 und weist dort eine flansch- oder wulstartige Verdickung 64 auf.

Diejenigen Führungszapfen 46, die sich durch das zylindrische Loch 42 der zugehörigen Bremsbacke 34 hindurcherstrecken, sind in einer Führungsbüchse 66 geführt, die beispielsweise aus Sintermetall besteht und derart in das zugehörige Loch 42 eingepreßt ist, daß sie zugleich das zylindrische Ende 62 der zugehörigen Schutzhülse 56 festklemmt.

Die beim Bremsen von der Bremsscheibe 10 auf jede der beiden Bremsbacken 34 ausgeübten Bremskräfte werden von jeder Bremsbacke nur über die zugehörige Führungsbüchse 66 auf den von dieser umschlossenen Führungszapfen 46 übertragen, während der andere, durch den Schlitz 44 derselben Bremsbacke hindurchragende Führungszapfen 46 nur dazu dient, ein Schwenken der Bremsbacke zu verhindern.

Am freien Ende 54 jedes Führungszapfens 46 kann ein Schlüsselsechskant 68, vorzugsweise ein Innensechskant, ausgebildet sein, damit die Führungszapfen 46 gehindert werden können, sich mitzudrehen, wenn die Gewindebolzen 50 zum Auswechseln der Bremsbacken 34 abgeschraubt werden. Die Führungszapfen 46 samt Schutzhülse 56 und, falls vorhanden, Führungsbüchse 66 bleiben mit der zugehörigen Bremsbacke 34 verbunden und werden zusammen mit dieser erneuert.

### Patentansprüche

1. Teilbelag-Scheibenbremse, insbesondere für Kraftfahrzeuge, mit einem Paar Bremsbacken (34), die je einer Seite einer Bremsscheibe (10) zugeordnet sind, und von denen mindestens eine Bremsbacke (34) eine Trägerplatte (36) mit mindestens einem reibbelagfreien Ansatz (40) aufweist, mit dem sie für ihre Verschiebung zur Bremsscheibe (10) hin an einem Führungszapfen (46) geführt ist, der an einem Bremsträger (12) befestigt ist und sich durch den zugehörigen Ansatz (40) hindurch in eine an diesem befestigte Schutzhülse (56) erstreckt, wobei der Führungszapfen (46) und die Schutzhülse (56) je ein der Bremsscheibe (10) zugewandtes Ende (54 bzw. 60) haben, dadurch gekennzeichnet, daß die Schutzhülse (56) längselastisch gestaltet ist, mit einem Ende im Bereich des Ansatzes (40) der Trägerplatte (36) gegen den Führungszapfen (46) abgedichtet ist und mit ihrem der Bremsscheibe (10) zugewandten anderen Ende (60) am entsprechenden Ende (54) des zugehörigen Führungszapfens (46) dicht befestigt ist, und daß die Befestigung des Führungszapfens (46) am Bremsträger (12) lösbar ist, so daß die Bremsbacke (34), der Führungszapfen (46) und die Schutzhülse (56) eine als Ganzes auswechselbare Einheit bilden.

2. Scheibenbremse nach Anspruch 1, dadurch gekennzeichnet, daß die Schutzhülse (56) einen Faltenbalg (58) aufweist.

3. Scheibenbremse nach Anspruch 2, dadurch gekennzeichnet, daß der Faltenbalg (58) aus Korrosionsbeständigem Metall besteht und zugleich als Rückstellfeder für die zugehörige Bremsbacke (34) ausgebildet ist.

4. Scheibenbremse nach einem der Ansprüche 1 bis 3, dadurch gekennzeichnet, daß das vom Ansatz (40) der zugehörigen Bremsbacke (34) entfernte Ende (60) der Schutzhülse (56) ringförmig gestaltet und am freien Ende (54) des zugehörigen Führungszapfens (46) festgenietet ist.

5. Scheibenbremse nach einem der Ansprüche 1 bis 4, dadurch gekennzeichnet, daß das am Ansatz (40) befestigte Ende (62) der Schutzhülse (56), mittels einer den Führungszapfen (46) umschließenden Führungsbüchse (66) festgeklemmt ist.

6. Scheibenbremse nach einem der Ansprüche 1 bis 4, dadurch gekennzeichnet, daß das am Ansatz (40) befestigte Ende (62) der Schutzhülse (56) selber als Führungsbüchse für den Führüngszapfen (46) ausgebildet ist.

7. Scheibenbremse nach einem der Ansprüche 1 bis 6, dadurch gekennzeichnet, daß der Führungszapfen (46) ein Innengewinde (48) hat, in das ein am Bremsträger (12) befestigter Gewindebolzen (50) eingeschraubt ist.

### Claims

1. A spot-type disc brake, especially for motor vehicles, comprising a pair of brake pads (34), one each associated with either side of a brake disc (10) and at least one brake pad (34) thereof including a backplate (36) which has a projection (40) free of friction lining and serving to guide the brake pad on a guide pin (46) for displacement towards the brake disc (10), the guide pin being fixed to a carrier member (12) of the brake and passing through the corresponding projection (40) into a protective sleeve (56) fixed to the same, the guide pin (46) and the protective sleeve (56) each having a free end (54 and 60, respectively) facing the brake disc (10), caracterized in that the protective sleeve (56) is designed to be elastic in longitudinal direction, has one end sealed against the guide pin (46) in the area of the projection (40) of the backplate (36), and has its other end (60) facing the brake disc (10) fixed tightly at the corresponding end (54) of the associated guide pin (46), and in that the fastening of the guide pin (46) at the carrier member (12) is releasable so that the brake pad (34), the guide pin (46), and the protective sleeve (56) present a unit which is exchangeable as a whole.

2. The disc brake as claimed in claim 1, characterized in that the protective sleeve (56) comprises a bellows (58).

3. The disc brake as claimed in claim 2, characterized in that the bellows (58) is made of corrosion-resistant metal and, at the same time, is designed to act as return spring for the corresponding brake pad (34).

4. The disc brake as claimed in one of claims 1 to 3, characterized in that the end (60) of the protective sleeve (56) remote from the projection (40) of the corresponding brake pad (34) is of annular configuration and riveted to the free end (54) of the associated guide pin (46).

5. The disc brake as claimed in one of claims 1 to 4, characterized in that the end (62) of the protective sleeve (56) fastened at the projection (40) is clamped by means of a guide bushing (66) enclosing the guide pin (46).

6. The disc brake as claimed in one of claims 1 to 4, characterized in that the end (62) of the protective sleeve (56) fastened at the projection (40) is designed itself as guide bushing for the guide pin (46).

7. The disc brake as calimed in one of claims 1 to 6, characterized in that the guide pin (46) has an internal thread (48) which threadingly receives a threaded bolt (50) fixed to the carrier member (12).

## Revendications

1. Frein à disque à garniture partielle, notamment pour véhicules automobiles, comportant un couple de mâchoires de frein (34), qui sont associées aux côtés respectifs d'un disque de frein (10) et dont au moins l'une (34) comporte une plaque de support (36) possédant au moins une partie saillante (40) sans garniture de friction, au moyen de laquelle la mâchoire de frein est guidée, pour sa translation en direction du disque de frein (10), contre un embout de guidage (46), qui est fixé sur un support de frein (12) et traverse la partie saillante associée (40) en étant disposé à l'intérieur d'un manchon de protection (56) fixé sur cette partie saillante, l'embout de guidage (46) et le manchon de protection (56) possédant chacun une extrémité (54 ou 60) tournée vers le disque de frein (10), caractérisé en ce que le manchon de protection (56) est réalisé de manière à présenter une élasticité longitudinale, est étanchéifié, par une extrémité, par rapport à l'embout de guidage (46), au voisinage de la partie saillante (40) de la plaque de support (36) et est fixé de façon étanche, par son autre extrémité (60) tournée vers le disque de frein (10), sur l'extrémité correspondante (54) de l'embout associé de guidage (46), et que la fixation de l'embout de guidage (46) sur le support de frein (12) est amovible de sorte que la mâchoire de frein (34), l'embout de guidage (46) et le manchon de protection (56) forment une unité interchangeable dans son ensemble.

2. Disque de frein selon la revendication 1, caractérisé en ce que le manchon de protection (56) présente un soufflet (58).

3. Disque de frein selon la revendication 2, caractérisé en ce que le soufflet (58) est réalisé en un métal résistant à la corrosion et agencé simultanément de manière à former un ressort de rappel pour la mâchoire de frein associée (34).

4. Disque de frein selon l'une des revendications 1 à 3, caractérisé en ce que l'extrémité (60) du manchon de protection (56), éloignée de la partie saillante (40) de la mâchoire de frein associée (34), possède une forme annulaire et est fixée par rivetage sur l'extrémité libre (54) de l'embout associé de guidage (46).

5. Frein à disque selon l'une des revendications 1 à 4, caractérisé en ce que l'extrémité (62), fixée sur la partie saillante (40), du manchon de protection (56) est bloquée par serrage à l'aide d'une douille de guidage (66) entourant l'embout de guidage (46).

6. Frein à disque selon l'une des revendications 1 à 4, caractérisé en ce que l'extrémité (62), fixée sur la partie saillante (40), du manchon de protection (56) est réalisée elle-même sous la forme d'une douille de guidage pour l'embout de guidage (46).

7. Frein à disque selon l'une des revendications 1 à 6, caractérisé en ce que l'embout de guidage (46) comporte un taraudage (48), dans lequel est vissé un goujon fileté (50) fixé au support de frein (12).

FIG. 1

EP 0 242 722 B1

FIG. 2